Europäisches Patentamt

European Patent Office

Office européen des brevets

(19)

(11) Veröffentlichungsnummer: **0 264 734 B1**

(12) **EUROPÄISCHE PATENTSCHRIFT**

(45) Veröffentlichungstag der Patentschrift: **18.03.92**

(51) Int. Cl.5: **G01C** **3/10**, G01S 17/46, G01S 7/48

(21) Anmeldenummer: **87114747.6**

(22) Anmeldetag: **09.10.87**

(54) **Verfahren und Vorrichtung zum berührungslosen optischen Messen von Wegen, insbesondere im Triangulationsverfahren.**

(30) Priorität: **11.10.86 DE 3634724**

(43) Veröffentlichungstag der Anmeldung:
**27.04.88 Patentblatt 88/17**

(45) Bekanntmachung des Hinweises auf die Patenterteilung:
**18.03.92 Patentblatt 92/12**

(84) Benannte Vertragsstaaten:
**BE CH FR GB IT LI LU NL SE**

(56) Entgegenhaltungen:
**DE-A- 3 302 948**
**DE-C- 1 951 026**
**US-A- 4 155 630**

(73) Patentinhaber: **Mesacon Gesellschaft für Messtechnik mbH**
**Martin-Schmeisser-Weg 15**
**W-4600 Dortmund 50(DE)**

(72) Erfinder: **Brunk, Wolfgang**
**Gottfried-August-Bürgerstrasse 30**
**W-3407 Gleichen OT Wöllmarshausen(DE)**

(74) Vertreter: **Rehberg, Elmar, Dipl.-Ing.**
**Postfach 3162 Am Kirschberge 22**
**W-3400 Göttingen(DE)**

EP 0 264 734 B1

## Beschreibung

Die Erfindung bezieht sich auf ein Verfahren zum berührungslosen optischen Messen von Wegen, insbesondere im Triangulationsverfahren, bei dem Licht einer monochromatischen und kohärenten Lichtquelle, z. B. eines Halbleiterlasers, eines Gaslasers o. dgl., auf eine diffus streuende Oberfläche eines Objekts geworfen und der dort entstehende Lichtfleck mit einer Optik auf einem positionsbestimmenden Bildaufnehmer abgebildet wird, mit dessen Hilfe zeitlich integrierend die Lage des Lichtflecks ermittelt wird. Die Erfindung zeigt gleichzeitig eine Vorrichtung zur Durchführung dieses Verfahrens.

Ein Verfahren der eingangs beschriebenen Art unter Anwendung des Triangulationsverfahrens ist aus der DE-PS 33 02 948 bekannt. Dabei wird auf das zu messende Objekt ein Lichtstrahl gerichtet und der Abstand des Objekts von der Lichtquelle in Richtung dieses Lichtstrahls bestimmt. Die Oberfläche des Objekts muß notwendigerweise die Eigenschaft besitzten, den auftreffenden Lichtstrahl diffus zu streuen, so daß auf dem Objekt ein Lichtfleck erzeugt wird, der im Idealfall in allen Richtungen gleich intensiv strahlt. Dieser Lichtfleck ist damit an die Oberfläche des Objekts gebunden und führt, falls sich das Objekt bewegt, alle Bewegungen des Objekts in Strahlrichtung gleichermaßen aus. Dieser Lichtfleck wird mittels einer Optik auf einem positionsbestimmenden Bildaufnehmer abgebildet. Aus den auf diese Weise bestimmten Positionsmeßwerten läßt sich die Bewegung des bewegten Objekts oder die Lage eines stillstehenden Objekts in Strahlrichtung feststellen. Als positionsbestimmende Bildaufnehmer werden sowohl großflächige, integrierende Einzelelemente mit positionsproportionalen Stromausgängen (PSD) als auch eine Vielzahl von zeilen- oder flächenmäßig angeordneten Photodioden (CCD) angewendet. Für beide Arten von Bildaufnehmern oder anderen Photodetektoren gilt allgemein, daß die Güte der Positionsbestimmung mit abnehmender Bildgröße zunimmt. Daher ist es sinnvoll, den auf das Objekt gerichteten Lichtstrahl möglichst scharf zu bündeln, um auf diese Weise den dort erzeugten Lichtfleck klein zu halten. Bei gleicher abgestrahlter Lichtleistung wird dadurch außerdem die Leistungsdichte des Lichtflecks erhöht und somit der Kontrast zur Umgebung verbessert. Weiterhin sollte der Durchmesser des Lichtflecks vom Abstand unabhängig sein. Dies ist nur bei ausreichender Parallelität des ausgesandten Lichtstrahls erfüllt.

Die Summe der gewünschten Eigenschaften eines z. B. für die Anwendung des Triangulationsverfahrens optimalen Lichtstrahls läßt sich am besten mit einem Gaslaser erfüllen. Der von einem Gaslaser ausgehende Lichtstrahl verfügt über geringe Divergenz, geringen Strahldurchmesser sowie eine hohe Leistungsdichte. Bedingt durch die Kohärenz des Laserlichts kann es zu Interferenzerscheinungen kommen. Eine spezielle Art von Interferenzen, die sog. Speckles, treten immer dann auf, wenn das Laserlicht diffus gestreut wird. Betrachtet man z. B. mit dem bloßen Auge den von einem Laser auf einem gut streuenden Objekt, beispielsweise einem Stück Papier, erzeugten Lichtfleck, so erscheint die Helligkeit nicht konstant. Insbesondere bei verschiedenen Beobachtungswinkeln schwankt die Helligkeit stark. Das gestreute Licht ist nicht homogen, sondern verfügt über eine "körnige" Struktur. Die Ursache für das Auftreten dieser Speckles liegt in der Natur der Streuung selbst: als Modell der streuenden Oberfläche eines Objekts kann man sich eine Vielzahl von Elementarspiegeln auf der Oberfläche des Objekts vorstellen. Je ungeordneter diese Elementarspiegel angeordnet sind, desto mehr und gleichmäßiger wird der einfallende Lichtstrahl in allen Richtungen gleichmäßig reflektiert, also gestreut. Sind die gedachten Elementarspiegel hingegen alle geordnet und parallel angeordnet, verhält sich die Oberfläche des Objekts wie ein Spiegel; es findet also keine Streuung statt. Bei einer realen, diffus streuenden Oberfläche müssen die Elementarspiegel nicht notwendigerweise in einer Linie liegen. Die Höhenlage zweier benachbarter Elementarspiegel kann, bedingt durch die Rauhigkeit der Oberfläche des Objekts, durchaus unterschiedlich sein. Dabei ist aber der optische Weg des reflektierten Teilstrahls nicht mehr für alle Lichtstrahlen gleich. Es treten Gangunterschiede auf, die zu den Interferenzen im gestreuten Licht führen.

Wird der durch eine reale Streuung entstandene Lichtfleck z. B. auf einem Bildaufnehmer (CCD) abgebildet, so führt das Auslesen der Helligkeitsverteilung über die Erstreckung des Lichtflecks zu der Feststellung, daß nur angenähert eine Gaußverteilung vorliegt. Der idealisierten, glockenförmigen Grundform der Gaußverteilung sind rein zufällig lokale Minima bzw. Maxima überlagert, also der Einfluß der Speckles. Die Lage und auch die Größe dieser Extrema innerhalb der Gaußverteilung sind nicht konstant, sondern vom Auftreffort und Auftreffwinkel des Lichtstrahls auf die streuende Oberfläche abhängig. Die Rauhigkeit der Oberfläche hat Einfluß auf die Intensität und Verteilung dieser Interferenzen. Die Helligkeit über die Erstreckung des Lichtflecks ist also in aller Regel asymmetrisch verteilt. Die elektronische Auswertung einer solchen asymmetrischen und nur eingeschränkt reproduzierbaren Helligkeitsverteilung ist daher in dieser Hinsicht entsprechend ungenau.

Auch bei Anwendung von über den Lichtfleck auf dem Objekt integrierenden Bildaufnehmern (PSD) wird die Lage des optischen Schwerpunkts

des Lichtflecks verschoben und damit ein falsches Ergebnis für die tatsächliche Lage des Lichts auf dem Objekt angegeben. Bei Auswertung des Lichtflecks mit zeilenoder flächenmäßig arbeitenden Bildaufnehmern (CCD) entsteht auf jedem Element des Bildaufnehmers eine der jeweiligen Teilbelichtung entsprechende Spannung, die mit einer Referenzspannung verglichen wird. Bei Überschreiten dieser Bezugsgröße gilt das entsprechende Flächenelement als belichtet. Das arithmetische Mittel aus der Position des ersten und des letzten auf diese Weise bestimmten Flächenelements ergibt ein Maß für die Lage des Zentrums der Abbildung des Lichtflecks auf dem Bildaufnehmer. Diese Lage wird infolge der asymmetrischen Lichtverteilung bzw. der lokalen Extrema ebenfalls verfälscht, so daß die theoretisch mögliche Positionsbestimmung für die Abbildung des Lichtflecks auf dem Bildaufnehmer mit einem maximalen Fehler von +-1 Flächenelement nicht erreicht wird. Die Verteilung der Speckles im Lichtfleck ändert sich auch mit den Änderungen des optischen Weges, z. B. durch Luftbewegungen im Bereich des Lichtstrahls, Temperatureinflüsse oder durch thermische Instabilitäten der Lichtquelle.

Der Erfindung liegt die Aufgabe zugrunde, ein Verfahren und eine Vorrichtung der eingangs beschriebenen Art aufzuzeigen, bei denen der das Meßergebnis verfälschende Einfluß der Speckles beseitigt ist.

Erfindungsgemäß wird dies dadurch erreicht, daß der Lichtfleck auf der Oberfläche des Objekts bewegt wird, und zwar mit einer Amplitude, die so groß ist, daß das arithmetische Mittel der Amplituden der durch die Speckles hervorgerufenen Störung der Intensitätsverteilung des Lichtflecks an jeder Stelle des Lichtflecks über die Größe des Lichtflecks angenähert Null ergibt, und mit einer Bewegungsfrequenz, die gleich oder größer als die Bildaufnahmefrequenz des Bildaufnehmers ist, und zwar entweder mit einer Bewegungsfrequenz, die sehr viel größer als die Bildaufnahmefrequenz des Bildaufnehmers oder - wenn die Bewegungsfrequenz in der Größenordnung der Bildaufnahmefrequenz liegt - ein ganzzahliges Vielfaches der Bildaufnahmefrequenz ist. Unter der Bildaufnahmefrequenz wird der reziproke Wert der Zeitdauer verstanden, über die der Bildaufnehmer integriert. Die Bewegung des Lichtflecks hat somit in einer solchen Zeitspanne zu erfolgen, die gleich oder kleiner als die Integrationszeit des Bildaufnehmers ist, und zwar entweder mit einer Zeitspanne, die sehr viel kürzer als die Integrationszeit des Bildaufnehmers, oder - wenn die Zeit in der Größenordnung der Integrationszeit liegt - ein ganzzahliger Teil der Integrationszeit ist. Der LIchtstrahl steht damit nichts ortsfest auf der Oberfläche des Objekts, sondern wird um einen geringen Betrag oder Winkel vergleichsweise schnell bewegt, so daß durch die Integration des gestreuten Lichts auf dem Bildaufnehmer die Wirkung der zufallsverteilten Speckles durch Mittelung beseitigt wird. Zur Anwendung dieses Verfahrens müssen die folgenden Voraussetzungen erfüllt sein, die in der Regel erfüllt werden: die durch die Oberfläche des Objekts erzeugten Speckles müssen ortsabhängig sein, d. h. bei unterschiedlicher Position des Lichtflecks auf der Oberfläche müssen andere Interferenzmuster entstehen. Der Bildaufnehmer (PSD, CCD) muß zeitlich integrierend arbeiten, also über ein Zeitintervall das Licht sammeln und mitteln.

Eine andere Lösung der Aufgabe setzt ebenfalls erfindungsgemäß voraus, daß der Lichtfleck auf der Oberfläche des Objekts bewegt wird, und zwar mit einer Amplitude, die so groß ist, daß das arithmetische Mittel der Amplituden der durch die Speckles hervorgerufenen Störung der Intensitätsverteilung des Lichtflecks an jeder Stelle des Lichtflecks über die Größe des Lichtflecks angenähert Null ergibt, wobei die Bewegung mit einer Bewegungsfrequenz erfolgt, die kleiner als die Bildaufnahmefrequenz des Bildaufnehmers ist; die Bewegungsfrequenz muß dann mit der Bildaufnahmefrequenz in der Weise gekoppelt sein, daß nach mehreren Integrationen die Teilstrecken der Bewegung des Lichtflecks lückenlos und gleichgewichtig erfaßt werden. Auch dann entfällt der verfälschende Einfluß der Speckles.

Bei beiden Lösungen sollte bei Anwendung eines Triangulationsverfahrens die Bewegung des Lichtflecks orthogonal und symmetrisch zur Triangulationsebene erfolgen. Damit wird der Abstand zwischen Lichtquelle und Objekt während der Bewegung des Lichtstrahls nicht wesentlich verändert bzw. die Abstandsänderung ist so klein, daß sie vernachlässigbar ist. Bei Anwendung eines Autokollimations-Verfahrens erfolgt die Bewegung des Lichtflecks orthogonal zu der Achse in beliebigen Richtungen.

Die Bildaufnahmefrequenz, also der reziproke Wert der Zeitdauer, über die der Bildaufnehmer integriert, kann vorteilhaft zur Erzeugung der Bewegungsfrequenz verwendet werden, so daß auf diese Art und Weise eine Kopplung erreicht wird. Dies bezieht sich auf die zuerst angegebene Lösung. Besonders einfach wird dies Kopplung, wenn die Bildaufnahmefrequenz und die Bewegungsfrequenz im Verhältnis 1:1 angewendet werden.

Die Bewegung des Lichtstrahls bzw. des Lichtflecks muß einerseits relativ klein, aber andererseits so groß sein, daß signifikant andere Speckles miterzeugt werden. Eine Bewegung um den Durchmesser des Lichtstrahls oder einen Teil desselben reicht im allgemeinen aus.

Die Vorrichtung zur Durchführung des Verfahrens arbeitet mit einer monochromatischen, kohärenten Lichtquelle zur Erzeugung eines Lichtflecks auf dem zu messenden Objekt mit diffus streuender Oberfläche und mit einer Optik zum Abbilden des Lichtflecks auf einem positionsbestimmenden und zeitlich integrierend arbeitenden Bildaufnehmer. Sie kennzeichnet sich erfindungsgemäß dadurch, daß im Strahlengang zwischen Lichtquelle und Objekt eine Ablenkvorrichtung für den von der Lichtquelle ausgesandten Lichtstrahl um einen kleinen Winkel oder Versatz vorgesehen ist. Mit dem kleinen Winkel ist eine Drehbewegung des Lichtstrahls angesprochen. Unter Versatz wird eine Parallelverschiebung des Lichtstrahls zu sich selbst verstanden.

Die Ablenkvorrichtung ist vorteilhaft als hochfrequente, elektrisch ansteuerbare Vorrichtung mit Drehspiegel, insbesondere als Galvano-Ablenkantrieb oder als Piezo-Schwinger, ausgebildet. Durch die elektrische Ansteuerung kann der meist erforderliche hochfrequente Antrieb der Ablenkvorrichtung vergleichsweise einfach realisiert werden. Auch die Synchronisierung zwischen Bildaufnahmefrequenz und Bewegungsfrequenz läßt sich elektrisch sehr einfach herstellen.

Im Strahlengang zwischen der Optik und dem Bildaufnehmer kann eine Zylinderlinse angeordnet sein. Hierdurch wird eine anamorphetische Abbildung erreicht. Die Verwendung dieser Zylinderlinse ist erforderlich, wenn ohne sie die Abbildung den positionsempfindlichen Bereich des Bildaufnehmers verlassen würde. Durch die Zylinderlinse wird die Abbildung gleichsam auf einen Strich zusammengedrängt.

Der Optik kann ein weiterer Drehspiegel vorgeschaltet sein, wobei der Drehspiegel der Ablenkvorrichtung und der weitere Drehspiegel synchron bewegt werden können. Für die synchrone Bewegung können die beiden Drehspiegel über eine gemeinsame Welle gekoppelt sein. Es ist auch möglich, die Drehspiegel auf zwei Piezo-Schwingern anzuordnen und diese beiden Piezo-Schwinger synchron anzusteuern.

Es besteht auch die Möglichkeit, die Ablenkvorrichtung auch zur Ansteuerung der Meßrichtung auszubilden. Dies bedeutet, daß die Ablenkvorrichtung als ein und dieselbe Baueinheit doppelt benutzbar ist, nämlich einmal zum Ansteuern der Meßrichtung und sodann zur Bewegung des Lichtstrahls bei festgehaltener Meßrichtung.

Die Erfindung wird anhand zweier Ausführungsbeispiele der Vorrichtung weiter beschrieben. Es zeigen:

Figur 1     den prinzipiellen Aufbau einer ersten Vorrichtung und

Figur 2     den prinzipiellen Aufbau einer weiteren Vorrichtung.

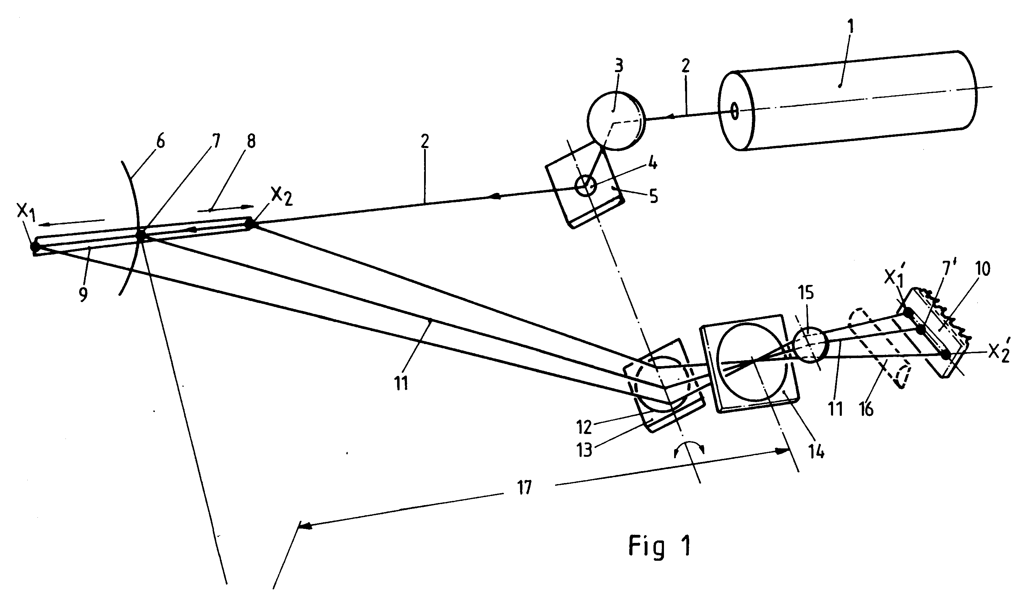

Die Vorrichtung zum berührungslosen optischen Messen von Wegen gemäß Figur 1 weist eine Lichtquelle (1) auf, die insbesondere als Halbleiterlaser oder Gaslaser ausgebildet sein kann. Wichtig ist, daß es sich um eine Lichtquelle zur Aussendung von monochromatischem und kohärentem Licht handelt. Ein von der Lichtquelle (1) ausgesandter Lichtstrahl (2) fällt zunächst auf einen Spiegel (3), der für eine flache Bauweise der Vorrichtung erforderlich ist, umdie axiale Erstreckung der Lichtquelle (1) etwa auch in der Meßebene unterzubringen. Prinzipiell ist jedoch der Spiegel (3) nicht erforderlich. Der Lichtstrahl (2) wird von dem Spiegel (3) auf einen Drehspiegel (4) abgebildet, der auch als Schwingspiegel bezeichnet werden kann und beispielsweise auf der Oberfläche eines Piezo-Schwingers (5) aufgeklebt ist. Durch die entsprechende elektrische Ansteuerung des Piezo-Schwingers (5) wird der Drehspiegel (4) in eine entsprechende, hin- und hergehende Bewegung versetzt, so daß hier die Bewegungsfrequenz des Drehspiegels (4) entsteht. Der Lichtstrahl (2) fällt sodann auf ein Objekt (6) bzw. die Oberfläche des Objekts (6) und bildet dort einen Lichtfleck (7) ab. Die Oberfläche des Objekts (6) ist so beschaffen, daß der auftreffende Lichtstrahl (2) diffus gestreut wird, so daß der Lichtfleck (7) erkennbar ist und weiter abgebildet werden kann. Das Objekt (6) kann ganz verschiedene Formgebung aufweisen oder sich in verschiedener Entfernung von der Lichtquelle (1) befinden, so daß auf diese Weise der Lichtfleck (7) in einem Meßbereich (8) zwischen den Endpunkten $x_1$ und $x_2$ fallen bzw. auftreffen kann. Es wird hier eine polare Meßebene (9) im Raum aufgespannt.

Der Lichtfleck (7) wird in dem dargestellten Strahlengang letztendlich auf einem Bildaufnehmer (10) abgebildet. Im Strahlengang des Abbildungsstrahls (11) ist zunächst ein Drehspiegel (12) auf einem weiteren Piezo-Schwinger (13) vorgesehen, der synchron mit dem Piezo-Schwinger (5) angesteuert wird. Hierdurch gelangt der Abbildungstrahl (11) mit Hilfe einer Optik (14) auf einen Spiegel (15) und von dort auf den Bildaufnehmer (10). Der Spiegel (15) dient ebenso wie der Spiegel (3) nur zur Umlenkung des Abbildungsstrahls (11) zwecks Erreichung einer flachen Bauweise der Vorrichtung. Statt des synchron mit dem Drehspiegel (4) angetriebenen Drehspiegels (12) kann anstelle des Drehspiegels (12) auch ein ortsfester Spiegel an dieser Stelle angeordnet werden. In diesem Falle ist es erforderlich, zusätzlich eine Zylinderlinse (16) zu verwenden, die gestrichelt im Strahlengang dargestellt ist. Die Zylinderlinse (16) ist für eine anamorphetische Abbildung vorgesehen und verhindert, daß der abgebildete Lichtfleck (7') aus dem positionsempfindlichen Bereich des Bildaufnehmers (10) herauswandert. Über entsprechende Abbildungsstrahlen sind auch die Endpunkte $x_1$ und $x_2$ des Meßbereichs (8) als Abbildungspunkte $x_1$, und

x₂, auf dem Bildaufnehmer (10) dargestellt. Von der durch die Achse des Drehspiegels (13) und der Optik (14) aufgespannten Ebene kann ein Arbeitsabstand (17) zum Lichtfleck (7) definiert sein.

Durch den Piezo-Schwinger (5) mit dem Drehspiegel (4) wird der Lichtstrahl in einem kleinen Winkel vergleichsweise hochfrequent bewegt. Die Bewegung ist so klein, daß sie mit dem bloßen Augen nicht wahrnehmbar ist. Diese Bewegung führt zur Bewegung des Lichtflecks (7) auf der Oberfläche des Objekts (6), so daß sich auf dem Bildaufnehmer (10) infolge der Speckles unterschiedliche Interferenzstrukturen abbilden. Der Bildaufnehmer (10) (PSD, CCD, Film) muß integrierend arbeitend ausgebildet sein. Durch arithmetische Mittelwertbildung der Amplituden der durch die Speckles hervorgerufenen Störung der Intensitätsverteilung des Lichtflecks (7) an jeder Stelle des Lichtflecks über die Größe des Lichtflecks wird der störende Einfluß der Speckles auf die Messung beseitigt. Dies kann auf zwei verschiedene Arten geschehen: entweder muß die Bewegungsfrequenz des Lichtflecks (7) gleich oder größer als die Bildaufnahmefrequenz des Bildaufnehmers (10) sein, dann wird eine Bewegungsfrequenz gewählt, die sehr viel größer als die Bildaufnahmefrequenz des Bildaufnehmers ist, oder -wenn die Bewegungsfrequenz in der Größernordnung der Bildaufnahmefrequenz liegt - muß die Bewegungsfrequenz ein ganzzahliges Vielfaches der Bildaufnahmefrequenz sein, damit letztendlich der Einfluß der Speckles verschwindet. Es ist aber auch möglich, daß die Bewegungsfrequenz kleiner als die Bildaufnahmefrequenz des Bildaufnehmers ist. Dann muß die Mittelwertbildung sich auf mehrere Integrationen des Bildaufnehmers erstrecken. Die Bewegungsfrequenz ist dann mit der Bildfrequenz in der Weise zu koppeln, daß durch die mehreren Integrationen die Teilstrecken der Bewegung des Lichtflecks lückenlos und gleichgewichtig erfaßt werden, damit durch die Mittelwertbildung insoweit keine Fehler erfolgen.

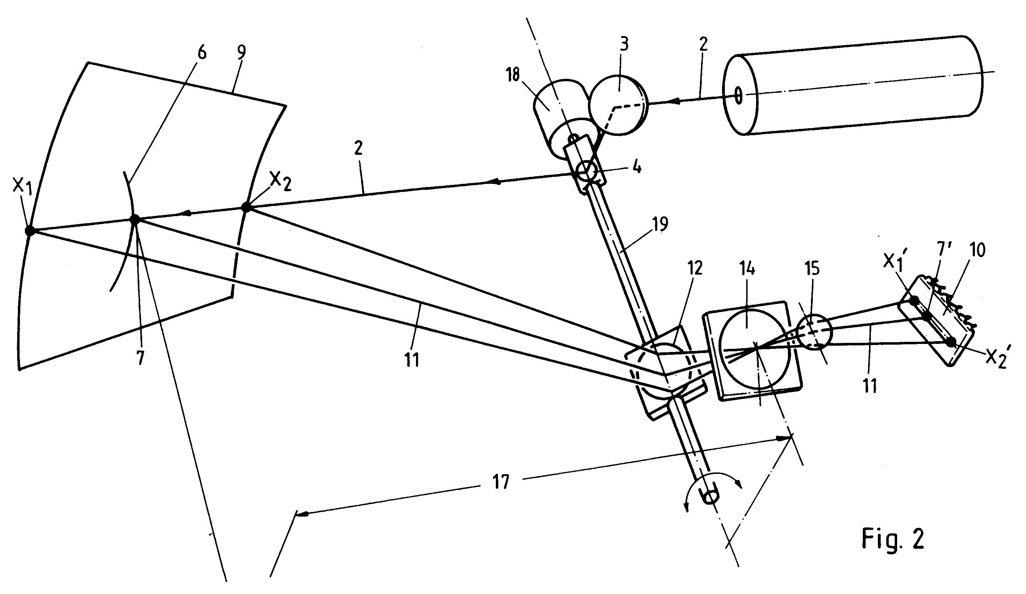

Figur 2 zeigt eine zweite Ausführungsmöglichkeit der Vorrichtung, die ganz ähnlich aufgebaut ist wie die Vorrichtung nach Figur 1. Anstelle der Piezo-Schwinger (5, 13) ist als Ablenkvorrichtung hier ein einachsiger Galvano-Ablenkantrieb (18) vorgesehen, auf dessen Welle (19) die Drehspiegel (4 und 12) angeordnet sind, so daß auf diese Art und Weise die synchrone Steuerung der beiden Drehspiegel (4 und 12) realisiert ist. Ein solcher Galvano-Ablenkantrieb (18) wird reversierend angetrieben und ermöglicht es, den Lichtstrahl (2) mit kleiner Winkelablenkung sehr schnell als Lichtfleck (7) auf der Oberfläche des Objekts (6) zu bewegen. Der Galvano-Ablenkantrieb (18) kann beispielsweise mit einer Bewegungsfrequenz von 2,353 kHz angesteuert werden. In Verbindung damit wird ein Bildaufnehmer (10) (CCD) eingesetzt, der eine Integrationszeit von 850 μsec bei einer Integrationswiederholrate von 1 kHz aufweist.

Das Meßverfahren wird mit dieser Vorrichtung entsprechend durchgeführt, wobei die Besonderheit ausgenutzt werden kann, daß mit dem Galvano-Ablenkantrieb (18) zunächst die Meßrichtung eingestellt werden kann und erst dann die Bewegung des Lichtstrahls (2) bzw. des Lichtflecks (7), die auch als Subscanning bezeichnet werden kann, erfolgt.

**Patentansprüche**

1. Verfahren zum berührungslosen optischen Messen von Wegen, insbesondere im Triangulationsverfahren, bei dem Licht einer monochromatischen und kohärenten Lichtquelle, z. B. eines Halbleiterlasers, eines Gaslasers o. dgl., auf eine diffus streuende Oberfläche eines Objekts geworfen und der dort entstehende Lichtfleck mit einer Optik auf einem positionsbestimmenden Bildaufnehmer abgebildet wird, mit dessen Hilfe zeitlich integrierend die Lage des Lichtflecks ermittelt wird, dadurch gekennzeichnet, daß der Lichtfleck auf der Oberfläche des Objekts bewegt wird, und zwar mit einer Amplitude, die so groß ist, daß das arithmetische Mittel der Amplituden der durch die Speckles hervorgerufenen Störung der Intensitätsverteilung des Lichtflecks an jeder Stelle des Lichtflecks über die Größe des Lichtflecks angenähert Null ergibt, und mit einer Bewegungsfrequenz, die gleich oder größer als die Bildaufnahmefrequenz des Bildaufnehmers ist, und zwar entweder mit einer Bewegungsfrequenz, die sehr viel größer als die Bildaufnahmefrequenz des Bildaufnehmers oder - wenn die Bewegungsfrequenz in der Größenordnung der Bildaufnahmefrequenz liegt - ein ganzzahliges Vielfaches der Bildaufnahmefrequenz ist.

2. Verfahren zum berührungslosen optischen Messen von Wegen, insbesondere im Triangulationsverfahren, bei dem Licht einer monochromatischen und kohärenten Lichtquelle, z. B. eines Halbleiterlasers, eines Gaslasers o. dgl., auf eine diffus streuende Oberfläche eines Objekts geworfen und der dort entstehende Lichtfleck mit einer Optik auf einem positionsbestimmenden Bildaufnehmer abgebildet wird, mit dessen Hilfe zeitlich integrierend die Lage des Lichtflecks ermittelt wird, dadurch gekennzeichnet, daß der Lichtfleck auf der Oberfläche des Objekts bewegt wird, und zwar mit einer Amplitude, die so groß ist, daß das arithmetische Mittel der Amplituden der durch die Speckles hervorgerufenen Störung der Intensitätsverteilung des Lichtflecks an jeder Stelle des Lichtflecks über die Größe des Lichtflecks angenähert Null ergibt, und mit einer Bewegungsfrequenz, die kleiner als die Bildaufnahmefrequenz des Bildaufnehmers ist, und daß die Bewegungsfrequenz mit der Bildaufnahmefrequenz in der Weise gekoppelt ist, daß nach mehreren Integrationen die Teilstrecken der Bewegung des Lichtflecks lückenlos und gleichgewichtig erfaßt werden.

3. Verfahren nach Anspruch 1 oder 2, dadurch gekennzeichnet, daß bei Anwendung eines Triangulationsverfahrens die Bewegung des Lichtflecks orthogonal und symmetrisch zur Triangulationsebene erfolgt.

4. Verfahren nach Anspruch 1, dadurch gekennzeichnet, daß die Bildaufnahmefrequenz zur Erzeugung der Bewegungsfrequenz verwendet wird.

5. Vorrichtung zur Durchführung des Verfahrens nach Anspruch 1 oder 2, mit einer monochromatischen kohärenten Lichtquelle zur Erzeugung eines Lichtflecks auf dem zu messenden Objekt mit diffus streuender Oberfläche und mit einer Optik zum Abbilden des Lichtflecks auf einem positionsbestimmenden und zeitlich integrierend arbeitenden Bildaufnehmer, dadurch gekennzeichnet, daß im Strahlengang zwischen Lichtquelle (1) und Objekt (6) eine Ablenkvorrichtung (5, 18) für den von der Lichtquelle (1) ausgesandten Lichtstrahl (2) um einen kleinen Winkel oder Versatz vorgesehen ist.

6. Vorrichtung nach Anspruch 5, dadurch gekennzeichnet, daß die Ablenkvorrichtung als hochfrequente elektrisch ansteuerbare Vorrichtung mit Drehspiegel (4), insbesondere als Galvano-Ablenkantrieb (18) oder als Piezo-Schwinger (5), ausgebildet ist.

7. Vorrichtung nach Anspruch 5 oder 6, dadurch gekennzeichnet, daß im Strahlengang zwischen der Optik (14) und dem Bildaufnehmer (10) eine Zylinderlinse (16) angeordnet ist.

8. Vorrichtung nach Anspruch 6, dadurch gekennzeichnet, daß der Optik (14) ein weiterer Drehspiegel (12) vorgeschaltet ist, und daß der Drehspiegel (4) der Ablenkvorrichtung und der weitere Drehspiegel (12) synchron bewegbar angeordnet sind.

9. Vorrichtung nach Anspruch 5, dadurch gekennzeichnet, daß die Ablenkvorrichtung (18) auch zur Ansteuerung der Meßrichtung ausgebildet ist.

## Claims

1. Process for the contactless optical measurement of paths, in particular in the triangulation process, in which light from a monochromatic and coherent light source, for example a semiconductor laser, a gas laser or the like, is projected onto a diffusely scattering surface of an objekt and the light spot produced there is imaged by an optical system on a position-measuring image recorder, with the aid of which the position of the light spot is determined by integration with respect to time, characterised in that the light spot is moved on the surface of the object, to be precise with an amplitude which is so large that the arithmetic mean of the amplitudes of the interference, caused by the speckles, of the intensity distribution of the light spot yields approximately zero at each point of the light spot over the area of the light spot, and with a frequency of movement which is equal to or greater than the image recording frequency of the image recorder, to be precise either with a frequency of movement which is very much higher than the image recording frequency of the image recorder or - when the frequency of movement is of the order of magnitude of the image recording frequency - an integral multiple of the image recording frequency.

2. Process for the contactless optical measurement of paths, in particular in the triangulation process, in which light from a monochromatic and coherent light source, for example a semiconductor laser, a gas laser or the like, is projected onto a diffusely scattering surface of an object and the light spot produced there is imaged by an optical system on a position-measuring image recorder, with the aid of which the position of the light spot is determined by integration with request to time, characterised in that the light spot is moved on the surface of the object, to be precise with an amplitude which is so large that the arithmetic mean of the amplitudes of the interference, caused by the speckles, of the intensity distribution of the light spot yields approximately zero at each point of the light spot over the area of the light spot, and with a frequency of movement which is less that the image recording frequency of the image recorder, and in that the frequency of movement is coupled to the image recording frequency in such a way that after a plurality of integrations the segments of the movement of the light spot are detected completely and in an equally-weighted fashion.

3. Process according to Claim 1 or 2, characterised in that when a triangulation process is applied the movement of the light spot is performed orthogonally and symmetrically with respect to the triangulation plane.

4. Process according to Claim 1, characterised in that the image recording frequency is used to generate the frequency of movement.

5. Device for carrying out the process according to Claim 1 or 2, having a monochromatic, coherent light source for generating a light spot on the object to be measured, which has a diffusely scattering surface, and having an optical system for imaging the light spot on a position-determining image recorder, which operates by integration with respect to time, characterised in that a deflecting device (5, 18) for deflecting the light beau (2) emitted from the light source (1) by a small angle or offset is provided in the beam path between the light source (1) and object (6).

6. Device according to Claim 5, characterised in that the deflecting device is designed as a high-frequency electrically drivable device having a rotating mirror (4), in particular as an electric deflecting drive (18) or as a piezo-oscillator (5).

7. Device according to Claim 5 or 6, characterised in that a cylindrical lens (16) is arranged in the beam path between the optical system (14) and the image recorder (10).

8. Device according to Claim 6, characterised in that a further rotating mirror (12) is located in front of the optical system (14), and in that the rotating mirror (4) of the deflecting device and the further rotating mirror (12) are arranged in a synchronously movable fashion.

9. Device according to Claim 5, characterised in that the deflecting device (18) is also designed to control the measuring direction.

**Revendications**

1. Procédé de mesure optique de distances sans contact, en particulier par triangulation, dans lequel de la lumière d'une source de lumière monochromatique et cohérente, par exemple d'un laser semi-conducteur, d'un laser à gaz ou autre, est projetée sur la surface à dispersion diffuse d'un objet, et dans lequel le spot lumineux se formant à cet endroit est reproduit au moyen d'une optique sur un récepteur d'image déterminant la position, à l'aide duquel la position du spot est déterminée par intégration temporelle,
**caractérisé** en ce que le spot est mis en mouvement sur la surface de l'objet, et ceci avec une amplitude de grandeur telle que la moyenne arithmétique des amplitudes des perturbations provoquées par les "speckles" (taches colorées) dans la répartition de l'intensité du spot en tout endroit et influant sur la grandeur du spot soit voisine de zéro, et avec une fréquence du mouvement égale ou supérieure à la fréquence de prise de vues du récepteur d'image, et ceci, soit à une fréquence du mouvement qui est très largement supérieure à la fréquence de prise de vues du récepteur d'image, soit - quand la fréquence du mouvement est du même ordre de grandeur que la fréquence de prise de vues - à une fréquence du mouvement qui est un multiple entier de la fréquence de prise de vues.

2. Procédé de mesure optique de distances sans contact, en particulier par triangulation, dans lequel de la lumière d'une source de lumière monochromatique et cohérente, par exemple, d'un laser semi-conducteur, d'un laser à gaz ou autre, est projetée sur la surface à dispersion diffuse d'un objet, et dans lequel le spot lumineux se formant à cet endroit est reproduit au moyen d'une optique sur un récepteur d'image déterminant la position, à l'aide duquel la position du spot est déterminée par intégration temporelle,
**caractérisé** en ce que le spot est mis en mouvement sur la surface de l'objet, et ceci avec une amplitude de grandeur telle que la moyenne arithmétique des amplitudes des perturbations provoquées par les "speckles" ( taches colorées) dans la répartition de l'intensité du spot en tout endroit et influant sur la grandeur du spot soit voisine de zéro, et avec une fréquence du mouvement qui est plus petite que la fréquence de prise de vues du récepteur d'image, et en ce que la fréquence du mouvement est couplée avec la fréquence de prise de vues, de telle manière qu'après plusieurs intégrations les parcours partiels du mouvement du spot soient saisis sans aucune lacune, et de manière équilibrée.

3. Procédé selon la revendication 1 ou 2, caractérisé en ce que, en cas d'utilisation d'un processus de triangulation, le mouvement du spot a lieu orthogonalement et symétriquement par rapport au plan de triangulation.

4. Procédé selon la revendication 1, caractérisé en ce que la fréquence de prise de vues est utilisée pour produire la fréquence du mouvement.

5. Dispositif de mise en oeuvre du procédé selon la revendication 1 ou 2, avec une source de lumière monochromatique et cohérente pour produire un spot sur l'objet à mesurer ayant une surface à dispersion diffuse, et avec une optique pour reproduire l'image du spot sur un récepteur d'image déterminant la position et travaillant par intégration temporelle, **caractérisé** en ce qu'il est prévu, sur le trajet du rayonnement entre la source de lumière (1) et l'objet (6) un dispositif déviateur (5, 18) pour dévier le faisceau lumineux (2) émis par la source de lumière (1) selon un petit angle ou un petit déplacement.

6. Dispositif selon la revendication 5, caractérisé en ce que le dispositif déviateur est sous la forme d'un dispositif pouvant être commandé électriquement à haute fréquence avec un miroir tournant (4), en particulier sous la forme d'un entraînement galvanique du dispositif déviateur (18), ou sous la forme d'un oscillateur piézo (5).

7. Dispositif selon la revendication 5 ou 6, caractérisé en ce qu'une lentille cylindrique (16) est disposée sur le trajet du rayonnement entre l'optique (14) et le récepteur d'image (10).

8. Dispositif selon la revendication 6, caractérisé en ce qu'un deuxième miroir tournant (12) est disposé en avant de l'optique (14) et en ce que le miroir tournant (4) du dispositif déviateur et le deuxième miroir tournant (12) sont disposés de manière à pouvoir être mis en mouvement en synchronisme.

9. Dispositif selon la revendication 5, caractérisé en ce que le dispositif déviateur (18) est agencé aussi pour commander le sens de mesure.

Fig 1

Fig. 2

EP 0 264 734 B1